# EUROPEAN PATENT SPECIFICATION

(11) **EP 4 344 918 B1**
(45) Date of publication and mention of the grant of the patent: **25.11.2026**
(21) Application number: 21947536.5
(22) Date of filing: 30.06.2021
(51) Int. Cl.: B60K 7/00, B60K 17/04, F16H 57/021, F16H 1/20

(54) **POWER ASSEMBLY SYSTEM AND ELECTRIC VEHICLE**
LEISTUNGSANORDNUNGSSYSTEM UND ELEKTROFAHRZEUG
SYSTÈME D'ENSEMBLE D'ALIMENTATION ET VÉHICULE ÉLECTRIQUE

(43) Date of publication of application: 03.04.2024
(73) Proprietor: Huawei Digital Power Technologies Co., Ltd., Shenzhen, Guangdong 518043 (CN)
(72) Inventor: TANG, Zhengyi, Shenzhen, Guangdong 518129 (CN); MA, Wenwu, Shenzhen, Guangdong 518129 (CN); WEI, Jingzhou, Shenzhen, Guangdong 518129 (CN); CAO, Yi, Shenzhen, Guangdong 518129 (CN)
(74) Representative: Epping - Hermann - Fischer
(86) International application number: PCT/CN2021/103524
(87) International publication number: WO 2023/272582

(56) References cited:
- WO-A2-2012/139567
- CN-A- 104 553 714
- CN-A- 105 329 080
- CN-A- 109 466 299
- CN-A- 110 239 326
- CN-U- 201 800 514
- CN-U- 209 813 696
- CN-U- 209 813 696
- CN-U- 211 519 227
- CN-U- 213 167 692
- CN-U- 213 167 692
- US-A1- 2001 011 611

## Description

### TECHNICAL FIELD

This invention relates to the field of electric vehicle technologies, and in particular, to a powertrain system and an electric vehicle.

### BACKGROUND

In recent years, environmental pollution and energy shortage have accelerated the development and utilization of green renewable energy. An electric vehicle has become a research topic in the automobile industry due to its advantages such as low pollution, low noise, and high energy efficiency. There are a plurality of driving manners of the electric vehicle, for example, a centralized driving manner and a distributed driving manner. A distributed driving electric vehicle is an important development direction of new energy vehicles. In this driving manner, left and right driving wheels are separately driven by using a powertrain system, and driving torques and braking torques of the left and right driving wheels are independently controllable. Therefore, it is easier to implement active vehicle control, and high safety and better driving experience are provided. However, in some existing electric vehicles that use the distributed driving manner, a structure size of a powertrain system is usually large, causing difficulty in vehicle layout. CN209813696U discloses, in the opinion of the Examining Division of the European Patent Office, a powertrain system, comprising two subsystems, wherein the two subsystems are disposed side by side in a first direction and are symmetrical to each other, each of the subsystems comprises a motor, a deceleration mechanism, and an output shaft, a rotation shaft of the motor is disposed in a second direction, and the deceleration mechanism comprises a cylindrical gear pair and a bevel gear pair, wherein in each of the subsystems, the cylindrical gear pair comprises an active cylindrical gear and a driven cylindrical gear; the bevel gear pair comprises an active bevel gear and a driven bevel gear, the active bevel gear is located on a side that is of the driven cylindrical gear and that is close to the motor; and the first direction and the second direction are disposed at an included angle.

CN211519227U discloses, in the opinion of the Examining Division of the European Patent Office, a powertrain system, comprising two subsystems, wherein the two subsystems are disposed side by side in a first direction and are (point) symmetrical to each other, each of the subsystems comprises a motor, a deceleration mechanism, and an output shaft, a rotation shaft of the motor is disposed in a second direction, and the deceleration mechanism comprises a cylindrical gear pair and a bevel gear pair, whereinin each of the subsystems, the cylindrical gear pair comprises an active cylindrical gear and a driven cylindrical gear, an axis of the active cylindrical gear is disposed in the second direction, and the active cylindrical gear is transmittedly connected to the rotation shaft of the motor; the bevel gear pair comprises an active bevel gear and a driven bevel gear, the active bevel gear is located on a side that is of the driven cylindrical gear and that is close to the motor, a small end of the active bevel gear is disposed close to the motor; and an axis of the driven bevel gear is disposed in the first direction, the driven bevel gear is located on a side that is of the motor, and the driven bevel gear is transmittedly connected to the output shaft; and the first direction and the second direction are disposed at an included angle.

CN213167692U discloses, in the opinion of the Examining Division of the European Patent Office, a powertrain system, comprising two subsystems, wherein the two subsystems are disposed side by side in a first direction and are symmetrical to each other, each of the subsystems comprises a motor, a deceleration mechanism, and an output shaft, a rotation shaft of the motor is disposed in a second direction, and the deceleration mechanism comprises a cylindrical gear pair and a bevel gear pair, wherein in each of the subsystems, the cylindrical gear pair comprises an active cylindrical gear and a driven cylindrical gear, an axis of the active cylindrical gear is disposed in the second direction, and the active cylindrical gear is transmittedly connected to the rotation shaft of the motor; and the driven cylindrical gear is located on a side that is of the active cylindrical gear and that is away from the other subsystem; the bevel gear pair comprises an active bevel gear and a driven bevel gear, the active bevel gear is located on a side that is of the driven cylindrical gear, and the active bevel gear is transmittedly connected to the driven cylindrical gear; and an axis of the driven bevel gear is disposed in the first direction, the driven bevel gear is located on a side that is of the motor, and the driven bevel gear is transmittedly connected to the output shaft; and the first direction and the second direction are disposed at an included angle.

### SUMMARY

This invention provides a powertrain system and an electric vehicle, to reduce a structure size of the powertrain system.

According to a first aspect, this invention provides a powertrain system according to claim 1. Subsequently options of a powertrain system are described by systematically using the verb "may". However, those of these options which describe a mandatory feature required by independent claim 1 as being optional, do not fall within the scope of protection as defined in independent claim 1. Options of a powertrain system may include two subsystems that are symmetrical to each other, and the two subsystems may be disposed side by side in a first direction; each subsystem may include a motor, a deceleration mechanism, and an output shaft; a rotation shaft of the motor is disposed in a second direction, and the second direction and the first direction are disposed at a specific included angle; and the deceleration mechanism may include a cylindrical gear pair and a bevel gear pair. The cylindrical gear pair may be used as a first-stage gear pair to transmittedly connect to the motor, and the bevel gear pair may be used as a second-stage gear pair to connect to the output shaft. In specific setting, the cylindrical gear pair may include an active cylindrical gear and a driven cylindrical gear, an axis of the active cylindrical gear is disposed in the second direction, and the active cylindrical gear is transmittedly connected to the rotation shaft of the motor; and the driven cylindrical gear is located on a side that is of the active cylindrical gear and that is away from the other subsystem. The bevel gear pair may include an active bevel gear and a driven bevel gear, the active bevel gear is located on a side that is of the driven cylindrical gear and that is close to the motor, a small end of the active bevel gear is disposed close to the motor, and the active bevel gear is transmittedly connected to the driven cylindrical gear. It may be understood that an axis of the active bevel gear is also disposed in the second direction; and an axis of the driven bevel gear is disposed in the first direction, the driven bevel gear may be located on a side that is of the motor and that is away from the other subsystem, and the driven bevel gear is transmittedly connected to the output shaft.

In the foregoing solution, the cylindrical gear pair and the bevel gear pair of the deceleration mechanism are properly arranged, so that sizes of the powertrain system in the first direction and the second direction can be effectively reduced, space occupied by the powertrain system in the electric vehicle can be reduced, and layout difficulty of the electric vehicle can be reduced.

In some possible implementation solutions, to implement power transfer between the motor and the driving wheel, the cylindrical gear pair may further include a first transmission shaft and a second transmission shaft. The active cylindrical gear may be assembled on the first transmission shaft, the driven cylindrical gear may be assembled on the second transmission shaft, and both the first transmission shaft and the second transmission shaft may be disposed in the second direction. **In** some possible implementation solutions, the powertrain system may further include a housing configured to accommodate the two subsystems. A first bearing may be disposed on an inner wall of the housing, and one end that is of the first transmission shaft and that faces away from the motor may be rotationally assembled in the first bearing, thereby improving motion stability of the first transmission shaft and structure reliability of the powertrain system.

**In** addition, a supporting arm may be further disposed on the inner wall of the housing, a second bearing may be disposed at one end of the supporting arm, and the second transmission shaft may be rotationally assembled in the second bearing, thereby improving motion stability of the second transmission shaft and structure reliability of the powertrain system.

Similarly, the bevel gear pair may further include a third transmission shaft and a fourth transmission shaft, the active bevel gear may be assembled on the third transmission shaft, the driven bevel gear may be assembled on the fourth transmission shaft, the third transmission shaft is disposed in the second direction, and the fourth transmission shaft is disposed in the first direction.

**In** some possible implementation solutions, a third bearing may be disposed on a shell of the motor, and one end that is of the fourth transmission shaft and that is close to the motor may be rotationally assembled in the third bearing, thereby improving motion stability of the fourth transmission shaft and structure reliability of the powertrain system.

It should be understood that an opening may be disposed at a position that is on the housing and that corresponds to the fourth transmission shaft, and one end that is of the fourth transmission shaft and that faces away from the motor may extend from the opening to an outer side of the housing, to connect to the driving wheel. A fourth bearing may be disposed in the opening, and the end that is of the fourth transmission shaft and that faces away from the motor may be assembled in the fourth bearing. **In** this way, rotation stability of the fourth transmission shaft can be improved. **In** addition, a frictional resistance caused by direct contact between the fourth transmission shaft and an inner wall of the opening can be avoided.

**In** some possible implementation solutions, the first direction may be perpendicular to the second direction. This helps reduce a distance between the bevel gear pair and the motor, so that a structure of the powertrain system can be more compact, and an overall structure size of the powertrain system can be reduced.

A side that is of the motor and that is close to the cylindrical gear pair is used as a first side of the motor. In some possible implementation solutions, for each subsystem, in the first direction, at least a part of the active cylindrical gear may overlap the first side of the motor. For example, the active cylindrical gear may completely overlap the first side of the motor, or the active cylindrical gear may partially overlap the motor. In this disposing manner, a distance between a small end of the driven bevel gear and the motor can be closer, so that a size of the powertrain system in the first direction can be reduced.

Similarly, a side that is of the motor and that is away from the other subsystem is used as a second side. In some possible implementation solutions, for each subsystem, in the second direction, at least a part of the driven bevel gear may overlap the second side of the motor. For example, the driven bevel gear may completely overlap the second side of the motor, or the driven bevel gear may partially overlap the motor. In this disposing manner, a distance between the small end of the active bevel gear and the motor can be closer, so that a size of the powertrain system in the second direction can be reduced.

In specific setting, a distance between the small end of the active bevel gear and the first side of the motor may be not greater than 50 mm. Similarly, a distance between the driven bevel gear and the second side of the motor may also be not greater than 50 mm.

In some possible implementation solutions, the rotation shaft of the motor and the active cylindrical gear may be of an integrated structure, to form an integrated gear shaft. This design can simplify a subsequent positioning and assembly process and improve assembly efficiency of the powertrain system.

In some other possible implementation solutions, the rotation shaft of the motor may alternatively be connected to the active cylindrical gear by using a transmission structure such as a coupling. In some possible implementation solutions, the output shaft and the driven bevel gear may also be of an integrated structure. This also helps improve assembly efficiency of the powertrain system. In some other possible implementations, the output shaft may alternatively be connected to the driven bevel gear by using a transmission structure such as a coupling.

In some possible implementation solutions, a distance between the two motors of the two subsystems may not be greater than 100 mm. In this way, the size of the powertrain system in the first direction can be reduced, thereby improving structure compactness of the powertrain system. It may be understood that, to further reduce the size of the powertrain system in the first direction, the two motors of the two subsystems may be further disposed in contact with each other. According to a second aspect, this invention further provides an electric vehicle according to claim 11. Subsequently options of an electric vehicle are described by systematically using the verb "may". However, those of these options which describe a mandatory feature required by independent claim 11 as being optional, do not fall within the scope of protection as defined in independent claim 11. Options of an electric vehicle may include two driving wheels and the powertrain system in any one of the foregoing possible implementation solutions. The two driving wheels may be disposed side by side in a first direction, the powertrain system may be disposed between the two driving wheels, and the output shafts of the two subsystems may be separately connected to the two driving wheels. Because the powertrain system of the electric vehicle has a compact structure and a small size, layout difficulty of the electric vehicle is reduced.

In some possible implementation solutions, the first direction may be specifically a width direction of the electric vehicle, and a second direction may be specifically a length direction of the electric vehicle. In this case, space occupied by the powertrain system in both the width direction and the length direction of the electric vehicle is reduced, thereby effectively reducing layout difficulty of the electric vehicle.

In some possible implementation solutions, the output shaft may be integrated with a half shaft at a corresponding driving wheel. In this way, a connection mechanism such as a spline between the output shaft and the half shaft may be omitted, a structure of the powertrain system is simplified, and integration and compactness of the system are improved.

### BRIEF DESCRIPTION OF DRAWINGS

FIG. 1 is a schematic diagram of a structure of an electric vehicle according to an embodiment of this invention;
FIG. 2 is a bottom view of an electric vehicle according to an embodiment of this invention; and
FIG. 3 is a schematic diagram of a structure of a powertrain system according to an embodiment of this invention.

### Reference numerals:

1-electric vehicle; 100-battery; 200-powertrain system; 300-driving wheel; 210-housing;
220-first subsystem; 230-second subsystem; 10-motor; 20-deceleration mechanism; 30-output shaft; 11-shell;
12-rotation shaft; 111-first side; 112-second side; 113-third side; 114-fourth side; 1111-through hole;
21-cylindrical gear pair; 22-bevel gear pair; 211-active cylindrical gear; 212-driven cylindrical gear;
213-first transmission shaft; 214-second transmission shaft; 40-first bearing; 50-supporting arm; 51-second bearing;
221-active bevel gear; 222-driven bevel gear; 223-third transmission shaft; 224-fourth transmission shaft;
60-third bearing; 2101-opening; and 70-fourth bearing.

### DESCRIPTION OF EMBODIMENTS

To make the objectives, technical solutions, and advantages of the present invention clearer, the following further describes the present invention in detail with reference to the accompanying drawings. Reference to "an embodiment", "some embodiments", or the like described in this specification indicates that one or more embodiments of this invention include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. In addition, terms such as "first" and "second" in this specification are merely used for distinguishing and description, and cannot be understood as an indication or implication of relative importance or an indication or implication of a sequence.

Terms used in the following embodiments are merely intended to describe specific embodiments, but are not intended to limit this invention. The terms "one", "a" and "this" of singular forms used in this specification and the appended claims of this invention are also intended to include expressions such as "one or more", unless otherwise specified in the context clearly.

In recent years, environmental pollution and energy shortage have accelerated the development and utilization of green renewable energy. Developing a new energy vehicle represented by an electric vehicle is an important measure to achieve energy saving, emission reduction, and pollution control. The electric vehicle replaces a fuel engine with an electric motor, which not only achieves zero emission, low noise, and no pollution, but also saves a large amount of oil energy that is gradually exhausted. With increasing maturity and development of power battery technologies for the electric vehicle, the electric vehicle inevitably becomes a main development trend of the automobile industry in the future.

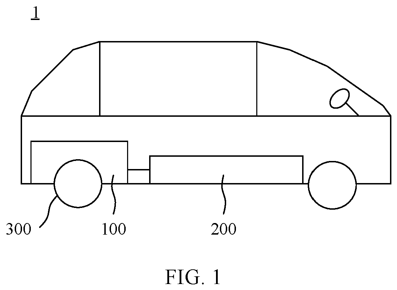

Fig.1-3 show an embodiment of the invention as claimed. However, the subsequent description describes, with reference to Fig.1-3, options of a powertrain system and of an electric vehicle comprising such a powertrain system in a systematic optional style by using the verb "may". However, those of these options which describe a mandatory feature required by independent claim 1 or independent 11 as being optional, do not fall within the scope of protection as defined in independent claim 1 or independent 11.

FIG. 1 is a schematic diagram of a structure of an electric vehicle according to an embodiment of this invention. Refer to FIG. 1. An electric vehicle 1 may include a battery 100, a powertrain system 200, and a driving wheel 300. The battery 100 may be used as a power source of the electric vehicle 1, to provide electric energy for the powertrain system 200. The powertrain system 200 is connected to the driving wheel 300, and may be configured to: convert the electric energy of the battery 100 into a driving force, and transfer the driving force to the driving wheel 300, to drive the electric vehicle 1 to travel.

In some embodiments, the electric vehicle 1 may be a two-wheel drive vehicle, that is, there may be two driving wheels 300. During specific implementation, the two driving wheels 300 may be two rear wheels of the electric vehicle 1. In this case, the electric vehicle 1 is a rear-wheel drive vehicle. Alternatively, the two driving wheels 300 may be two front wheels of the electric vehicle 1. In this case, the electric vehicle 1 is a front-wheel drive vehicle. In some other embodiments, the electric vehicle 1 may alternatively be a four-wheel drive vehicle. In this case, all of four wheels at the front and rear of the electric vehicle 1 may be the driving wheels 300. The following embodiment is described by using an example in which the electric vehicle 1 is a two-wheel drive vehicle.

In this embodiment of this invention, the electric vehicle 1 may use a distributed driving manner, and separately drive the left and right driving wheels 300 by using the powertrain system 200, so that drive torques and braking torques of the left and right driving wheels 300 are independently controllable. In this way, autonomous control of the vehicle is more easily implemented, and the electric vehicle 1 has high safety and better driving experience.

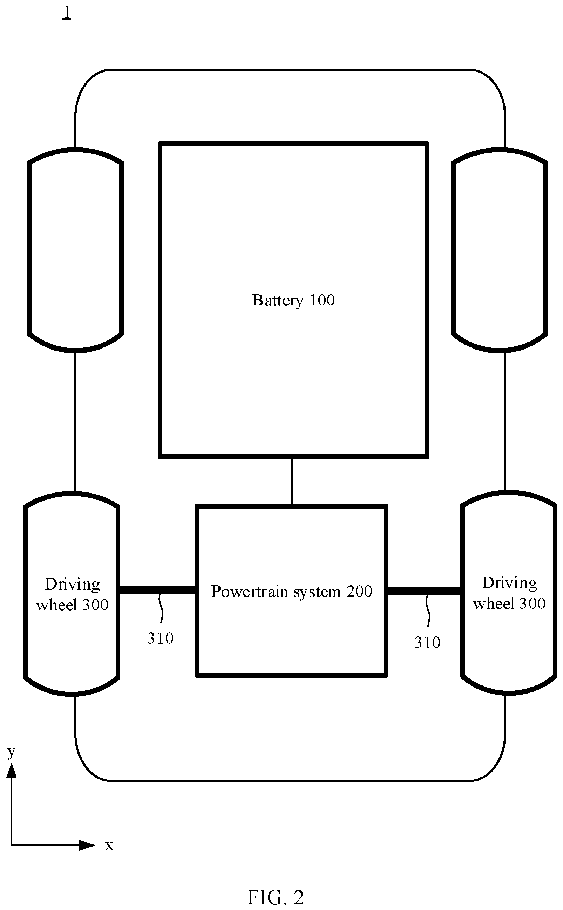

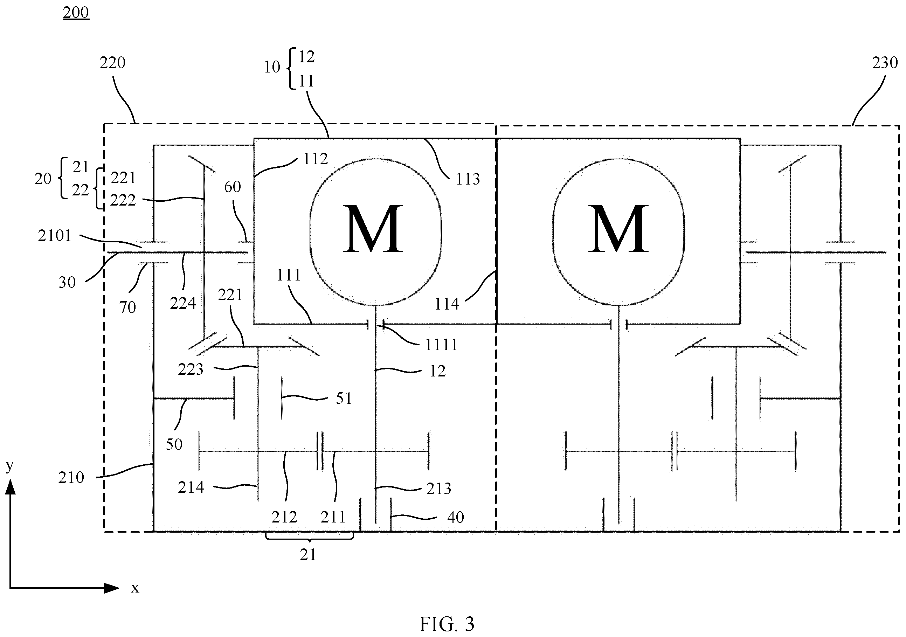

FIG. 2 is a bottom view of the electric vehicle according to an embodiment of this invention. FIG. 3 is a schematic diagram of a structure of the powertrain system according to an embodiment of this invention. Refer to FIG. 2 and FIG. 3. The powertrain system 200 may be disposed between the left and right driving wheels 300, and may include a housing 210 and two subsystems disposed in the housing 210 that are a first subsystem 220 and a second subsystem 230. A width direction of the electric vehicle 1 is a first direction (namely, an x direction), the first subsystem 220 and the second subsystem 230 may be disposed side by side in the first direction x, and the first subsystem 220 and the second subsystem 230 may be symmetrical to each other. The first subsystem 220 may be configured to drive the left driving wheel 300, and the second subsystem 230 may be configured to drive the right driving wheel 300. The first subsystem 220 and the second subsystem 230 are independent of each other, to implement independent control on the left and right driving wheels 300.

Each subsystem may include a motor 10, a deceleration mechanism 20, and an output shaft 30. The motor 10 may be electrically connected to the battery 100 of the electric vehicle 1, and generate a driving force by using electric energy provided by the battery 100. The deceleration mechanism 20 is transmittedly connected to the motor 10. The deceleration mechanism 20 may be configured to: perform deceleration and torque increase on the driving force output by the motor 10, and then output the driving force to the driving wheel 300 on a corresponding side by using the output shaft 30. The output shaft 30 may be integrated with a half shaft 310 at the driving wheel 300, and the output shaft 30 is the half shaft 310. Therefore, a connection mechanism such as a spline between the output shaft 30 and the half shaft 310 may be omitted, thereby simplifying the structure of the powertrain system 200, and improving integration and compactness of the system. In addition, it should be noted that FIG. 3 shows only some components of the powertrain system 200 as an example, and actual shapes, actual sizes, and actual structures of these components are not limited by FIG. 3. The following specifically describes a structure of the subsystem in detail by using the first subsystem 220 as an example.

In a specific design, the motor 10 may include a shell 11 and a rotation shaft 12. The shell 11 may include a first side 111, a second side 112, a third side 113, and a fourth side 114. A length direction of the electric vehicle 1 is a second direction (namely, a y direction). The first side 111 and the third side 113 of the shell 11 may be specifically disposed opposite to each other in the second direction y, and the second side 112 and the fourth side 114 of the shell 11 may be specifically disposed opposite to each other in the first direction x. In addition, the second side 112 of the shell 11 may be a side that is of the motor 10 and that is away from the motor 10 of the second subsystem 230, and the fourth side 114 of the shell 11 is a side that is of the motor 10 and that is close to the motor 10 of the second subsystem 230. A through hole 1111 is disposed on the first side 111 of the shell 11. One end of the rotation shaft 12 may extend out of the shell 11 from the through hole 1111, and the rotation shaft 12 may be specifically disposed in the second direction y. In other words, a disposing direction of the rotation shaft 12 of the motor 10 may be perpendicular to an arrangement direction of the left and right driving wheels 300. It should be noted that, although not shown in the figure, the motor 10 may further include a rotor iron core, a stator iron core, a stator coil, and the like. Because the motor 10 is a well-known and common power apparatus in the field, a specific structure setting form of the motor 10 is not described herein.

It should be noted that, in this embodiment, a distance between the motor 10 of the first subsystem 220 and the motor 10 of the second subsystem 230 may not be greater than 100 mm. This helps reduce a size of the powertrain system 200 in the first direction x, thereby improving structure compactness of the powertrain system 200. For example, the distance between the motor 10 of the first subsystem 220 and the motor 10 of the second subsystem 230 may be specifically 10 mm, 30 mm, 50 mm, 80 mm, 100 mm, or the like. Certainly, in some other embodiments, the motor 10 of the first subsystem 220 and the motor 10 of the second subsystem 230 may be alternatively disposed in contact with each other, that is, the fourth sides 114 of the shells 11 of the two motors 10 may be in contact with each other, thereby further reducing the size of the powertrain system 200 in the first direction x.

Still refer to FIG. 3. The deceleration mechanism 20 in this embodiment may be specifically a two-stage deceleration mechanism, and the deceleration mechanism 20 may include a cylindrical gear pair 21 and a bevel gear pair 22, where the cylindrical gear pair 21 is a first-stage deceleration gear pair, and the bevel gear pair 22 is a second-stage deceleration gear pair. The driving force output by the motor 10 may be output to the driving wheel by the cylindrical gear pair 21 and the bevel gear pair 22 in sequence.

The cylindrical gear pair 21 may be disposed on the first side 111 of the motor 10, and includes an active cylindrical gear 211 and a driven cylindrical gear 212 that can be engaged with each other. It may be understood that, to implement power transfer between the motor 10 and the driving wheel, in addition to the active cylindrical gear 211 and the driven cylindrical gear 212, the cylindrical gear pair 21 may further include a first transmission shaft 213 and a second transmission shaft 214. The active cylindrical gear 211 may be assembled on the first transmission shaft 213, the driven cylindrical gear 212 may be assembled on the second transmission shaft 214, and the first transmission shaft 213 and the second transmission shaft 214 are parallel to each other, and both may be disposed in the second direction y.

In some embodiments, the active cylindrical gear 211 and the first transmission shaft 213 may be of an assembly structure. The active cylindrical gear 211 and the first transmission shaft 213 may be relatively fastened in a key connection manner, or may be connected in an interference cooperation manner. In some other embodiments, the active cylindrical gear 211 and the first transmission shaft 213 may alternatively be of an integrated structure. In this case, the active cylindrical gear 211 and the first transmission shaft 213 are an integrated gear shaft. The active cylindrical gear 211 is transmittedly connected to the motor 10 by using the first transmission shaft 213. During specific implementation, the first transmission shaft 213 and the rotation shaft 12 of the motor 10 are disposed coaxially, and the first transmission shaft 213 and the rotation shaft 12 may be connected by using a transmission structure such as a coupling. Alternatively, the first transmission shaft 213 and the rotation shaft 12 may be of an integrated structure. It may be understood that when the active cylindrical gear 211 and the first transmission shaft 213 are also of an integrated structure, the active cylindrical gear 211, the first transmission shaft 213, and the rotation shaft 12 can be integrated, thereby simplifying a subsequent positioning and assembly process and helping improve assembly efficiency of the powertrain system 200.

It should be noted that a first bearing 40 may be disposed on an inner wall that is of the housing 210 and that is close to the first side 111 of the motor 10, and one end that is of the first transmission shaft 213 and that faces away from the motor 10 may be rotationally assembled in the first bearing 40, so that the first bearing 40 is used to support the first transmission shaft 213 and the active cylindrical gear 211 assembled on the first transmission shaft 213, thereby improving structure reliability of the powertrain system 200.

The driven cylindrical gear 212 may be disposed on a side that is of the active cylindrical gear 211 and that faces away from the second subsystem 230, that is, located on a side that is of the active cylindrical gear 211 and that is close to the second side 112 of the motor 10. Similarly, the driven cylindrical gear 212 and the second transmission shaft 214 may be of an assembly structure, or may be of an integrated gear shaft structure. This is not limited in this invention. When the driven cylindrical gear 212 and the second transmission shaft 214 are of an assembly structure, the two may be fastened to each other in a key connection manner or an interference cooperation manner. In addition, a supporting arm 50 may be disposed on an inner wall that is of the housing 210 and that is close to the second side 112 of the motor 10, a second bearing 51 may be disposed on an end of the supporting arm 50, and the second transmission shaft 214 may be rotationally assembled in the second bearing 51, so that the second bearing 51 is used to support the second transmission shaft 214 and the driven cylindrical gear 212 assembled on the second transmission shaft 214, thereby improving structure reliability of the powertrain system 200.

Still refer to FIG. 3. The bevel gear pair 22 may include an active bevel gear 221 and a driven bevel gear 222 that are engaged with each other, and a third transmission shaft 223 and a fourth transmission shaft 224. The active bevel gear 221 may be assembled on the third transmission shaft 223, the driven bevel gear 222 may be assembled on the fourth transmission shaft 224, and the third transmission shaft 223 and the fourth transmission shaft 224 are disposed at an included angle.

The active bevel gear 221 may be disposed on a side that is of the driven cylindrical gear 212 and that is close to the motor 10. In other words, the active bevel gear 221 is located between the driven cylindrical gear 212 and the first side 111 of the motor 10, and a small end of the active bevel gear 221 is disposed close to the motor 10. The third transmission shaft 223 is transmittedly connected to the second transmission shaft 214, so that power is transferred from the driven cylindrical gear 212 to the active bevel gear 221. During specific implementation, the third transmission shaft 223 and the second transmission shaft 214 are disposed coaxially, and may be connected by using a coupling. Alternatively, the third transmission shaft 223 and the second transmission shaft 214 may be of an integrated structure, so that a subsequent positioning and assembly process can be simplified.

The driven bevel gear 222 may be disposed on the second side 112 of the motor 10, that is, located on a side that is of the motor 10 and that faces away from the motor 10 of the second subsystem 230. It may be understood that a small end of the driven bevel gear 222 is also disposed close to the motor 10. The fourth transmission shaft 224 is transmittedly connected to the output shaft 30, so that power is transferred from the driven bevel gear 222 to the output shaft 30, and then transferred to the driving wheel by the output shaft 30. During specific implementation, the fourth transmission shaft 224 and the output shaft 30 are disposed coaxially, and the fourth transmission shaft 224 and the output shaft 30 may be connected by using a transmission structure such as a coupling. Alternatively, the fourth transmission shaft 224 and the output shaft 30 may be of an integrated structure, so that a subsequent positioning and assembly process can be simplified.

In some embodiments, the fourth transmission shaft 224 may be disposed in the first direction x. In this case, a disposing direction of the fourth transmission shaft 224 is perpendicular to a disposing direction of the third transmission shaft 223. This disposing manner can reduce space occupied by the bevel gear pair 22, thereby helping make the structure of the powertrain system 200 more compact, and reducing the overall structure size of the powertrain system 200.

In addition, a third bearing 60 may be disposed on the second side 112 of the motor 10, and one end that is of the fourth transmission shaft 224 and that is close to the motor 10 may be rotationally assembled in the third bearing 60, so that the third bearing 60 is used to support the fourth transmission shaft 224 and the driven bevel gear 222 assembled on the fourth transmission shaft 224, thereby improving structure reliability of the powertrain system 200. In addition, an opening 2101 is disposed at a position that is on the housing 210 and that corresponds to the fourth transmission shaft 224, and one end that is of the fourth transmission shaft 224 and that faces away from the motor 10 may extend from the opening 2101 to an outer side of the housing 210, to connect to the driving wheel. It may be understood that a fourth bearing 70 may be further disposed in the opening 2101. In this way, the end that is of the fourth transmission shaft 224 and that faces away from the motor 10 may be assembled in the fourth bearing 70. In this way, the fourth transmission shaft 224 can be supported, and rotation stability of the fourth transmission shaft 224 can be improved. In addition, a frictional resistance caused by direct contact between the fourth transmission shaft 224 and an inner wall of the opening 2101 can be avoided.

In this embodiment, in space, in the first direction x, the active bevel gear 221 may have a part that overlaps the first side 111 of the motor 10, that is, a projection of the active bevel gear 221 on a plane on which the first side 111 of the motor 10 is located may partially fall within an area of the first side 111 of the motor 10. A size of the overlapping part may be specifically determined by a size of the active bevel gear 221 and a size of the motor 10. For example, in some embodiments, the active bevel gear 221 may completely overlap the motor 10, that is, the projection of the active bevel gear 221 on the plane on which the first side 111 of the motor 10 is located may all fall within the area of the first side 111 of the motor 10. In some other embodiments, the active bevel gear 221 may partially overlap the motor 10. In this case, the active bevel gear 221 may partially exceed the second side 112 of the motor 10. By using this design, a distance between the small end of the driven bevel gear 222 and the second side 112 of the motor 10 can be closer, so that the size of the powertrain system 200 in the first direction x can be reduced, that is, a size of the powertrain system 200 in the width direction of the electric vehicle can be reduced, thereby helping reduce layout difficulty of the entire vehicle.

The distance between the small end of the driven bevel gear 222 and the second side 112 of the motor 10 may be not greater than 50 mm. For example, the distance between the small end of the driven bevel gear 222 and the second side 112 of the motor 10 may be specifically 10 mm, 15 mm, 25 mm, 40 mm, 50 mm, or the like.

Similarly, in space, in the second direction y, the driven bevel gear 222 may have a part that overlaps the second side 112 of the motor 10, that is, a projection of the driven bevel gear 222 on a plane on which the second side 112 of the motor 10 is located may partially fall within an area of the second side 112 of the motor 10. A size of the overlapping part may be specifically determined by a size of the driven bevel gear 222 and the size of the motor 10. For example, in some embodiments, the driven bevel gear 222 may completely overlap the motor 10, that is, the projection of the driven bevel gear 222 on the plane on which the second side 112 of the motor 10 is located may all fall within the area of the second side 112 of the motor 10. In some other embodiments, the driven bevel gear 222 may partially overlap the motor 10. In this case, the driven bevel gear 222 may partially exceed the first side 111 of the motor 10. By using this design, a distance between the small end of the active bevel gear 221 and the first side 111 of the motor 10 can be closer, so that the size of the powertrain system 200 in the second direction y can be reduced, that is, a size of the powertrain system 200 in the length direction of the electric vehicle can be reduced, thereby reducing layout difficulty of the entire vehicle.

The distance between the small end of the active bevel gear 221 and the first side 111 of the motor 10 may also be designed to be not greater than 50 mm. For example, the distance between the small end of the active bevel gear 221 and the first side 111 of the motor 10 may be specifically 10 mm, 15 mm, 25 mm, 40 mm, 50 mm, or the like.

It can be learned from the foregoing description that a power transfer path of the first subsystem 220 is as follows: Power of the motor 10 is output to the active cylindrical gear 211 by using the rotation shaft 12, then transferred by the active cylindrical gear 211 to the driven cylindrical gear 212 engaged with the active cylindrical gear 211, then transferred by the driven cylindrical gear 212 to the active bevel gear 221, then transferred by the active bevel gear 221 to the driven bevel gear 222, and finally transferred by the driven bevel gear 222 to the output shaft 30, and transferred to the left driving wheel by using the output shaft 30.

The foregoing uses the first subsystem 220 as an example to describe the structure of the subsystem and the power transfer path. It should be understood that, because the first subsystem 220 and the second subsystem 230 are symmetrically disposed, and structure arrangements of the first subsystem 220 and the second subsystem 230 are basically the same, a structure and a power transfer process of the second subsystem 230 are not described herein again.

In conclusion, according to the powertrain system 200 provided in Fig.1-3, the sizes of the powertrain system 200 in the first direction x and the second direction y can be effectively reduced by properly arranging the deceleration mechanism 20, so that space occupied by the powertrain system 200 in the electric vehicle can be reduced, and layout difficulty of the electric vehicle can be reduced.

## Claims

1. A powertrain system (200), comprising two subsystems (220, 230), wherein the two subsystems (220, 230) are disposed side by side in a first direction and are symmetrical to each other, each of the subsystems comprises a motor (10), a deceleration mechanism (20), and an output shaft (30), a rotation shaft (12) of the motor (10) is disposed in a second direction, and the deceleration mechanism (20) comprises a cylindrical gear pair (21) and a bevel gear pair (22),
whereby, in each of the subsystems (220, 230), the cylindrical gear pair (21) comprises an active cylindrical gear (211) and a driven cylindrical gear (212), an axis of the active cylindrical gear (211) is disposed in the second direction, and the active cylindrical gear (211) is transmittedly connected to the rotation shaft (12) of the motor (10); and the driven cylindrical gear (212) is located on a side that is of the active cylindrical gear (211) and that is away from the other subsystem (220, 230);
the bevel gear pair (22) comprises an active bevel gear (221) and a driven bevel gear (222), the active bevel gear (221) is located on a side that is of the driven cylindrical gear (212) and that is close to the motor (10), a small end of the active bevel gear (221) is disposed close to the motor (10), and the active bevel gear (221) is transmittedly connected to the driven cylindrical gear (212); and an axis of the driven bevel gear (221) is disposed in the first direction, the driven bevel gear (222) is located on a side that is of the motor (10) and that is away from the other subsystem, and the driven bevel gear (222) is transmittedly connected to the output shaft (30); and
the first direction and the second direction are disposed at an included angle.

2. The powertrain system (200) according to claim 1, wherein the first direction is perpendicular to the second direction.

3. The powertrain system (200) according to claim 1 or 2, wherein in each of the subsystems (220, 230), in the first direction, at least a part of the active bevel gear (221) overlaps a first side of the motor (10), wherein
the first side of the motor (10) is a side that is of the motor (10) and that is close to the cylindrical gear pair (21).

4. The powertrain system (200) according to claim 3, wherein a distance between the small end of the active bevel gear (221) and the first side of the motor (10) is not greater than 50 mm.

5. The powertrain system (200) according to any one of claims 1 to 4, wherein in each of the subsystems (220, 230), in the second direction, at least a part of the driven bevel gear (222) overlaps a second side of the motor (10), wherein
the second side of the motor (10) is the side that is of the motor (10) and that is away from the other subsystem.

6. The powertrain system (200) according to claim 3, wherein a distance between a small end of the driven bevel gear (222) and a second side of the motor (10) is not greater than 50 mm.

7. The powertrain system (200) according to any one of claims 1 to 6, wherein the rotation shaft (12) of the motor (10) and the active cylindrical gear (211) are of an integrated structure; or
the rotation shaft (12) of the motor (10) is connected to the active cylindrical gear (211) by using a transmission structure.

8. The powertrain system (200) according to any one of claims 1 to 7, wherein the output shaft (30) and the driven bevel gear (222) are of an integrated structure; or
the output shaft (30) is connected to the driven bevel gear (222) by using a transmission structure.

9. The powertrain system (200) according to any one of claims 1 to 8, wherein a distance between the two motors (10) is not greater than 100 mm.

10. The powertrain system (200) according to claim 9, wherein the two motors (10) are disposed in contact with each other.

11. An electric vehicle (1), comprising two driving wheels (300) and a powertrain system (200) according to any one of claims 1 to 10, wherein the two driving wheels (300) are disposed side by side in a first direction, the powertrain system (200) is disposed between the two driving wheels (300), and each output shaft (30) in the powertrain system (200) is transmittedly connected to one driving wheel (300).

12. The electric vehicle (1) according to claim 11, wherein the first direction is a width direction of the electric vehicle (1), and the second direction is a length direction of the electric vehicle (1).

## Patentansprüche

1. Antriebsstrangsystem (200), das zwei Teilsysteme (220, 230) umfasst, wobei die zwei Teilsysteme (220, 230) in einer ersten Richtung nebeneinander angeordnet und symmetrisch zueinander sind, jedes der Teilsysteme einen Motor (10), einen Verzögerungsmechanismus (20) und eine Abtriebswelle (30) umfasst, eine Drehwelle (12) des Motors (10) in einer zweiten Richtung angeordnet ist und der Verzögerungsmechanismus (20) ein Stirnradgetriebepaar (21) und ein Kegelradgetriebepaar (22) umfasst, wobei in jedem der Teilsysteme (220, 230) das Stirnradgetriebepaar (21) ein antreibendes Stirnradgetriebe (211) und ein angetriebenes Stirnradgetriebe (212) umfasst, eine Achse des antreibenden Stirnradgetriebes (211) in der zweiten Richtung angeordnet ist und das antreibende Stirnradgetriebe (211) mit der Drehwelle (12) des Motors (10) übertragend verbunden ist; und das angetriebene Stirnradgetriebe (212) auf einer Seite, die von dem antreibenden Stirnradgetriebe (211) stammt und die von dem anderen Teilsystem (220, 230) abgewandt ist, gelegen ist;
das Kegelradgetriebepaar (22) ein antreibendes Kegelradgetriebe (221) und ein angetriebenes Kegelradgetriebe (222) umfasst, wobei das antreibende Kegelradgetriebe (221) auf einer Seite, die von dem angetriebenen Stirnradgetriebe (212) stammt und die nahe dem Motor (10) liegt, gelegen ist, ein kleines Ende des antreibenden Kegelradgetriebes (221) nahe dem Motor (10) angeordnet ist und das antreibende Kegelradgetriebe (221) mit dem angetriebenen Stirnradgetriebe (212) übertragend verbunden ist; und eine Achse des angetriebenen Kegelradgetriebes (221) in der ersten Richtung angeordnet ist, das angetriebene Kegelradgetriebe (222) auf einer Seite, die von dem Motor (10) stammt und die von dem anderen Teilsystem abgewandt ist, gelegen ist, und das angetriebene Kegelradgetriebe (222) mit der Abtriebswelle (30) übertragend verbunden ist; und
die erste Richtung und die zweite Richtung in einem eingeschlossenen Winkel angeordnet sind.

2. Antriebsstrangsystem (200) nach Anspruch 1, wobei die erste Richtung senkrecht zu der zweiten Richtung ist.

3. Antriebsstrangsystem (200) nach Anspruch 1 oder 2, wobei in jedem der Teilsysteme (220, 230) in der ersten Richtung mindestens ein Teil des antreibenden Kegelradgetriebes (221) eine erste Seite des Motors (10) überlappt, wobei die erste Seite des Motors (10) eine Seite, die von dem Motor (10) stammt und die nahe dem Stirnradgetriebepaar (21) liegt, ist.

4. Antriebsstrangsystem (200) nach Anspruch 3, wobei ein Abstand zwischen dem kleinen Ende des antreibenden Kegelradgetriebes (221) und der ersten Seite des Motors (10) nicht größer als 50 mm ist.

5. Antriebsstrangsystem (200) nach einem der Ansprüche 1 bis 4, wobei in jedem der Teilsysteme (220, 230) in der zweiten Richtung mindestens ein Teil des angetriebenen Kegelradgetriebes (222) eine zweite Seite des Motors (10) überlappt, wobei die zweite Seite des Motors (10) die Seite, die von dem Motor (10) stammt und die von dem anderen Teilsystem abgewandt ist, ist.

6. Antriebsstrangsystem (200) nach Anspruch 3, wobei ein Abstand zwischen einem kleinen Ende des angetriebenen Kegelradgetriebes (222) und einer zweiten Seite des Motors (10) nicht größer als 50 mm ist.

7. Antriebsstrangsystem (200) nach einem der Ansprüche 1 bis 6, wobei die Drehwelle (12) des Motors (10) und das antreibende Kegelradgetriebe (211) eine integrierte Struktur aufweisen; oder
die Drehwelle (12) des Motors (10) durch Verwenden einer Übertragungsstruktur mit dem antreibenden Kegelradgetriebe (211) verbunden ist.

8. Antriebsstrangsystem (200) nach einem der Ansprüche 1 bis 7, wobei die Abtriebswelle (30) und das angetriebene Kegelradgetriebe (222) eine integrierte Struktur aufweisen; oder
die Abtriebswelle (30) durch Verwenden einer Übertragungsstruktur mit dem angetriebenen Kegelradgetriebe (222) verbunden ist.

9. Antriebsstrangsystem (200) nach einem der Ansprüche 1 bis 8, wobei ein Abstand zwischen den zwei Motoren (10) nicht größer als 100 mm ist.

10. Antriebsstrangsystem (200) nach Anspruch 9, wobei die zwei Motoren (10) in Kontakt miteinander angeordnet sind.

11. Elektrofahrzeug (1), das zwei Antriebsräder (300) und ein Antriebsstrangsystem (200) nach einem der Ansprüche 1 bis 10 umfasst, wobei die zwei Antriebsräder (300) in einer ersten Richtung nebeneinander angeordnet sind, das Antriebsstrangsystem (200) zwischen den zwei Antriebsrädern (300) angeordnet ist und jede Abtriebswelle (30) in dem Antriebsstrangsystem (200) mit einem Antriebsrad (300) übertragend verbunden ist.

12. Elektrofahrzeug (1) nach Anspruch 11, wobei die erste Richtung eine Breitenrichtung des Elektrofahrzeugs (1) ist und die zweite Richtung eine Längenrichtung des Elektrofahrzeugs (1) ist.

## Revendications

1. Système de groupe motopropulseur (200), comprenant deux sous-systèmes (220, 230), dans lequel les deux sous-systèmes (220, 230) sont disposés côte à côte dans une première direction et sont symétriques l'un par rapport à l'autre, chacun des sous-systèmes comprend un moteur (10), un mécanisme de décélération (20), et un arbre de sortie (30), un arbre de rotation (12) du moteur (10) est disposé dans une seconde direction, et le mécanisme de décélération (20) comprend une paire d'engrenages cylindriques (21) et une paire d'engrenages coniques (22), moyennant quoi, dans chacun des sous-systèmes (220, 230), la paire d'engrenages cylindriques (21) comprend un engrenage cylindrique actif (211) et un engrenage cylindrique entraîné (212), un axe de l'engrenage cylindrique actif (211) est disposé dans la seconde direction, et l'engrenage cylindrique actif (211) est relié en transmission à l'arbre de rotation (12) du moteur (10) ; et l'engrenage cylindrique entraîné (212) est situé sur un côté qui appartient à l'engrenage cylindrique actif (211) et qui est éloigné de l'autre sous-système (220, 230) ;
la paire d'engrenages coniques (22) comprend un engrenage conique actif (221) et un engrenage conique entraîné (222), l'engrenage conique actif (221) est situé sur un côté qui appartient à l'engrenage cylindrique entraîné (212) et qui est proche du moteur (10), une petite extrémité de l'engrenage conique actif (221) est disposée à proximité du moteur (10), et l'engrenage conique actif (221) est relié en transmission à l'engrenage cylindrique entraîné (212) ; et un axe de l'engrenage conique entraîné (221) est disposé dans la première direction, l'engrenage conique entraîné (222) est situé sur un côté qui appartient au moteur (10) et qui est éloigné de l'autre sous-système, et l'engrenage conique entraîné (222) est relié en transmission à l'arbre de sortie (30) ; et
la première direction et la seconde direction sont disposées selon un angle inclus.

2. Système de groupe motopropulseur (200) selon la revendication 1, dans lequel la première direction est perpendiculaire à la seconde direction.

3. Système de groupe motopropulseur (200) selon la revendication 1 ou 2, dans lequel, dans chacun des sous-systèmes (220, 230), dans la première direction, au moins une partie de l'engrenage conique actif (221) chevauche un premier côté du moteur (10), dans lequel
le premier côté du moteur (10) est un côté qui appartient au moteur (10) et qui est proche de la paire d'engrenages cylindriques (21).

4. Système de groupe motopropulseur (200) selon la revendication 3, dans lequel une distance entre la petite extrémité de l'engrenage conique actif (221) et le premier côté du moteur (10) n'est pas supérieure à 50 mm.

5. Système de groupe motopropulseur (200) selon l'une quelconque des revendications 1 à 4, dans lequel, dans chacun des sous-systèmes (220, 230), dans la seconde direction, au moins une partie de l'engrenage conique entraîné (222) chevauche un second côté du moteur (10), dans lequel
le second côté du moteur (10) est le côté qui appartient au moteur (10) et qui est éloigné de l'autre sous-système.

6. Système de groupe motopropulseur (200) selon la revendication 3, dans lequel une distance entre une petite extrémité de l'engrenage conique entraîné (222) et un second côté du moteur (10) n'est pas supérieure à 50 mm.

7. Système de groupe motopropulseur (200) selon l'une quelconque des revendications 1 à 6, dans lequel l'arbre de rotation (12) du moteur (10) et l'engrenage cylindrique actif (211) forment une structure monobloc ; ou
l'arbre de rotation (12) du moteur (10) est relié à l'engrenage cylindrique actif (211) en utilisant une structure de transmission.

8. Système de groupe motopropulseur (200) selon l'une quelconque des revendications 1 à 7, dans lequel l'arbre de sortie (30) et l'engrenage conique entraîné (222) forment une structure monobloc ; ou
l'arbre de sortie (30) est relié à l'engrenage conique entraîné (222) en utilisant une structure de transmission.

9. Système de groupe motopropulseur (200) selon l'une quelconque des revendications 1 à 8, dans lequel une distance entre les deux moteurs (10) n'est pas supérieure à 100 mm.

10. Système de groupe motopropulseur (200) selon la revendication 9, dans lequel les deux moteurs (10) sont disposés en contact l'un avec l'autre.

11. Véhicule électrique (1), comprenant deux roues motrices (300) et un système de groupe motopropulseur (200) selon l'une quelconque des revendications 1 à 10, dans lequel les deux roues motrices (300) sont disposées côte à côte dans une première direction, le système de groupe motopropulseur (200) est disposé entre les deux roues motrices (300), et chaque arbre de sortie (30) dans le système de groupe motopropulseur (200) est relié en transmission à une roue motrice (300).

12. Véhicule électrique (1) selon la revendication 11, dans lequel la première direction est une direction de largeur du véhicule électrique (1), et la seconde direction est une direction de longueur du véhicule électrique (1).
